# EUROPÄISCHE PATENTSCHRIFT

(11) **EP 1 164 059 B1**
(45) Veröffentlichungstag und Bekanntmachung des Hinweises auf die Patenterteilung: **04.08.2004**
(21) Anmeldenummer: 01112968.1
(22) Anmeldetag: 07.06.2001
(51) Int. Cl.: B60R 21/16

(54) **Vorrichtung und Verfahren zum Falten eines Gassacks**
Method and apparatus for folding an airbag
Procédé et dispositif permettant de plier un coussin gonflable

(30) Priorität: 13.06.2000 DE 10029056; 11.04.2001 DE 10118081
(43) Veröffentlichungstag der Anmeldung: 19.12.2001
(73) Patentinhaber: TRW Automotive GmbH, 73553 Alfdorf (DE)
(72) Erfinder: Hieber, Wolfgang, 73540 Heubach-Buch (DE); Berger, Jürgen, 73557 Mutlangen (DE); Strnad, Wilfried, 73557 Mutlangen (DE); Heigl, Jürgen, 73560 Böbingen (DE); Kienzle, Karl, 73527 Schwäbisch Gmünd (DE); Ritter, Philipp, 73525 Schwäbisch Gmünd (DE)
(74) Vertreter: Sties, Jochen, Dipl.-Ing.

(56) Entgegenhaltungen:
- DE-U- 29 516 426
- GB-A- 2 358 837
- US-A- 2 216 655
- US-A- 5 669 204
- US-A- 5 746 690
- US-A- 5 755 078

## Beschreibung

Die Erfindung betrifft eine Vorrichtung zum Falten eines Seitengassacks für ein Fahrzeuginsassen-Rückhaltesystem, sowie ein Verfahren zum Falten eines Gassacks.

Gassäcke für Fahrzeuginsassen-Rückhaltesysteme befinden sich vor ihrem Einsatz meist in Falten zusammengelegt in einem Gehäuse. Die Faltung ist so ausgelegt, daß einerseits der Gassack auf möglichst engem Raum zusammenlegbar ist, da das Platzangebot in der Regel beschränkt ist, und andererseits sich der Gassack im Rückhaltefall, wenn Gas in ihn einströmt, schnell und vollständig entfalten kann. Wegen der hierzu erforderlichen Präzision erfolgt die Faltung häufig in Handarbeit. Es besteht daher Bedarf an Vorrichtungen und Verfahren, die das Falten eines Gassackes beschleunigen und möglichst eine Automatisierung zulassen.

Ein Verfahren zum Falten eines Gassacks ist aus der DE 197 54 078 A1 bekannt, bei dem ein Gassack durch sukzessive hintereinander angeordnete Scheibenpaare in Falten gelegt wird, die nach Abschluß des Einbringens der Scheiben zusammengeschoben werden. Es werden also so viele Scheiben, wie Falten vorgesehen sind, benötigt. Die Scheiben sind in einem gewissen Abstand zueinander angeordnet, der größer ist als der Abstand der Falten im zusammengepreßten Zustand im Gassackgehäuse. Das notwendige Zusammenschieben und Anpressen der Falten birgt die Gefahr, daß sich die Präzision der Faltung verringert.

In der US 2 216 655 ist eine Vorrichtung beschrieben, mit der ein flexibles Material in einer Ziehharmonikafaltung gefaltet werden kann. Hierbei greifen zwei Faltlineale abwechselnd von gegenüberliegenden Seiten an dem Bogen an, legen jeweils eine Falte und schieben jeweils die bereits gebildeten Falten zusammen.

Diese US 2 216 655 zeigt einen Führungskanal, in dem ein zu faltendes flexibles Material angeordnet werder kann, und ein erstes und ein zweites Faltlineal, wobei die Faltlineale Zähne aufweisen und der Führungskanal ein erstes kammartiges Seitenteil und ein zweites kammartiges Seitenteil aufweist, wobei in dem einen Seitenteil mehrere schlitzförmige Ausnehmungen und in dem anderen Seitenteil eine schlitzförmige Ausnehmung vorgesehen sind, in die die Zähne der Faltlineale eingreifen.

Aufgabe der Erfindung ist es, eine Vorrichtung und ein Verfahren zum Falten eines Gassacks vorzustellen, mit der bzw. dem ein Gassack einfach und präzise gefaltet werden kann.

Dies wird mit einer erfindungsgemäßen Vorrichtung gemäß Anspruch 1 erreicht. Der Führungskanal, der im wesentlichen U-förmig ausgebildet sein kann, dient dabei als Aufnahme für die Falten des Gassacks. Durch die Faltlineale, die mit ihren Zähnen in die Ausnehmungen der Seitenteile eingreifen, ist der Gassack in Falten legbar. Aufgrund der Möglichkeit, die Zähne der Faltlineale in den Ausnehmungen der Seitenteile zu bewegen, können die Falten im Führungskanal zusammengepreßt werden. Da nur zwei Faltlineale benötigt werden, ist die Vorrichtung einfach und kostengünstig zu realisieren.

Die obige Aufgabe wird auch mit einem erfindungsgemäßen Verfahren gemäß Anspruch 8 gelöst. Jedes der Faltlineale schiebt die gerade gebildete Falte des Gassacks in Richtung des Endes des Gassacks und preßt sie an die vorherigen Falten des Gassacks an. Nach dem Anpressen verbleibt das jeweilige Faltlineal solange im Führungskanal, um die Falten des Gassacks zusammenzuhalten, bis das andere Faltlineal die nächste Falte gebildet hat. Da die Faltlineale abwechselnd in den Gassack eingreifen und pro Faltlineal jeweils eine Falte bilden, wonach das jeweilige Faltlineal zurückgezogen werden kann, ist die Anzahl von zwei Faltlinealen ausreichend. Da die Faltlineale die gerade entstandene Falte an die bereits vorhandenen Falten anpressen, entfällt ein nachträgliches Zusammenschieben und Anpressen der Falten, was die Präzision der Faltung erhöht.

Die erste Falte wird vorzugsweise gegen einen im Führungskanal angeordneten Anschlag geschoben, der eine definierte Anlagefläche bildet.

Weitere Vorteile und Merkmale der Erfindung ergeben sich aus den Unteransprüchen.

Die Erfindung wird im folgenden anhand der Beschreibung eines Ausführungsbeispiels und den beigefügten Figuren näher erläutert. In den Figuren zeigen:
- Figur 1 den Führungskanal einer erfindungsgemäßen Faltvorrichtung in einer perspektivischen Ansicht;
- die Figuren 2a und 2b ein erstes und ein zweites Faltlineal einer erfindungsgemäßen Faltvorrichtung in einer perspektivischen Darstellung;
- die Figuren 3a bis 3h eine Darstellung eines Verfahrens zum Falten eines Gassacks unter Verwendung einer erfindungsgemäßen Faltvorrichtung;
- die Figuren 4a und 4b zwei Arten von zu Bahnen verbundenen Gassäcken; und
- Figur 5 einen herkömmlichen Gassack mit daran angebrachten Spannbändern.

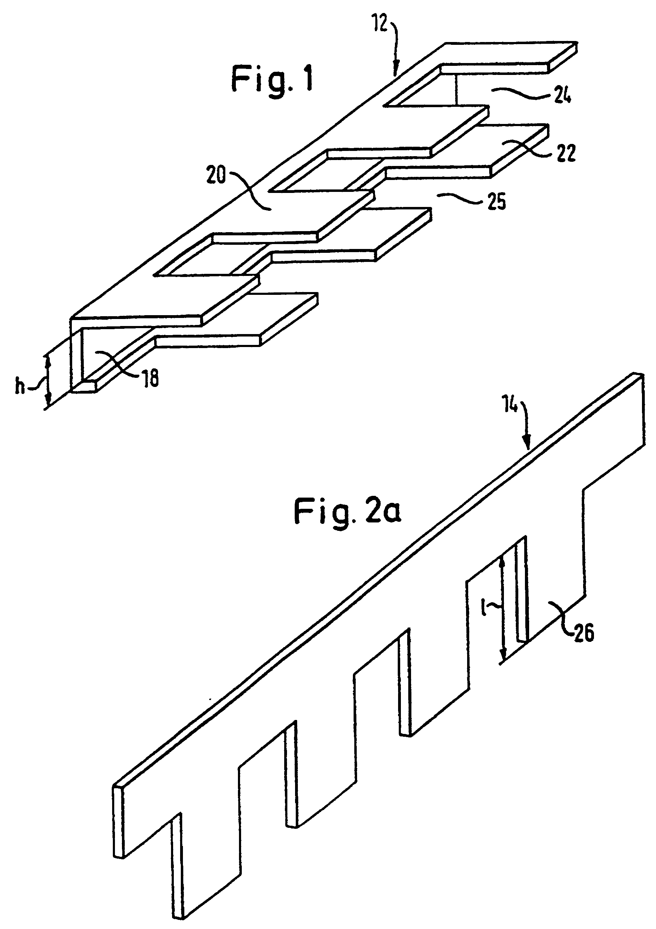

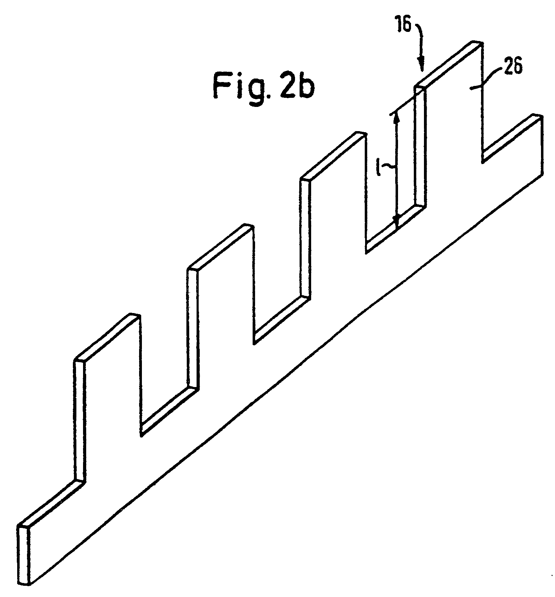

In den Figuren 1 und 2 sind die Hauptbestandteile einer Faltvorrichtung 10 dargestellt, und zwar ein Führungskanal 12 und ein erstes Faltlineal 14 sowie ein zweites Faltlineal 16. Der Führungskanal 12 ist in etwa U-förmig ausgebildet und weist eine Rückwand 18 auf, an der ein erstes Seitenteil 20 und ein zweites Seitenteil 22 angeordnet sind. Die beiden Seitenteile 20, 22 erstrecken sich parallel zueinander. Die Länge der Rückwand 18 in einer Richtung parallel zu den Seitenteilen ist in etwa so groß wie die Breite eines zu faltenden Seitengassacks, während die Länge der Seitenteile senkrecht zur Rückwand 18 ausreichend sein muß, um den Gassack als gefaltetes Paket aufzunehmen.

Die Höhe h der Rückwand 18 zwischen den beiden Seitenteilen 20, 22 entspricht der maximalen Höhe der Falten des Gassacks und ist vorzugsweise auf die Abmessung eines Gehäuses abgestimmt, das dazu vorgesehen ist, später den gefalteten Gassack aufzunehmen.

Die Seitenteile 20, 22 weisen Ausnehmungen 24, 25 auf, die vorzugsweise in gleichen Abständen zueinander entlang der Längsrichtung der Rückwand 18 angeordnet sind, so daß sich eine Art doppelter Kamm ergibt. Die Ausnehmungen 24 des ersten Seitenteils 20 sind gegenüber den Ausnehmungen 25 des zweiten Seitenteils 22 versetzt angeordnet.

Der Führungskanal 12 kann, wie hier gezeigt, eine gerade ausgebildete Rückwand 18 aufweisen, die Rückwand kann aber auch eine gekrümmte Form haben, um z.B. an die Krümmung des oberen Rands eines Seitengassacks angepaßt werden zu können.

Das erste Faltlineal 14 und das zweite Faltlineal 16 weisen Zähne 26 auf, die jeweils in Zahl, Breite und Abstand an die Ausnehmungen 24 der Seitenteile 20, 22 angepaßt sind. Die Länge 1 der Zähne 26 ist vorzugsweise größer als die Höhe h des Rückenteils 18. Die beiden Faltlineale 14, 16 können eine identische Form haben.

Wie auch der Führungskanal 12 können die Faltlineale 14, 16 gerade sein oder eine gekrümmte Form aufweisen. Im zweiten Fall sind sie in ihrer Krümmung bevorzugt an die Krümmung des Führungskanals angepaßt, so daß die Zähne über die ganze Länge der Ausnehmungen in diese eingreifen können.

Die Faltvorrichtung 10 weist außerdem einen Anschlag 28 auf, der nahe der Rückwand 18 angeordnet ist und durch eine Feder 30 von der Rückwand 18 weggerichtet beaufschlagt wird. Die Feder 30 dient zur Reduzierung der Kräfte, die auf den Gassack 32 wirken.

Das Verfahren zum Falten eines Gassacks läuft folgendermaßen ab: Ein Gassack 32 wird mit einem Ende 33 in den Führungskanal 12 eingelegt und am Anschlag 28 befestigt, vorzugsweise in der Nähe eines der Seitenteile 20, 22, im dargestellten Fall in der Nähe des oberen, ersten Seitenteils 20. Die Befestigung erfolgt vorzugsweise über die gesamte Breite des Gassacks 32. Der Rest des Gassacks 32 liegt ausgebreitet z.B. auf einem Tisch 34. Die beiden Faltlineale 14, 16 befinden sich außerhalb des Führungskanals 12.

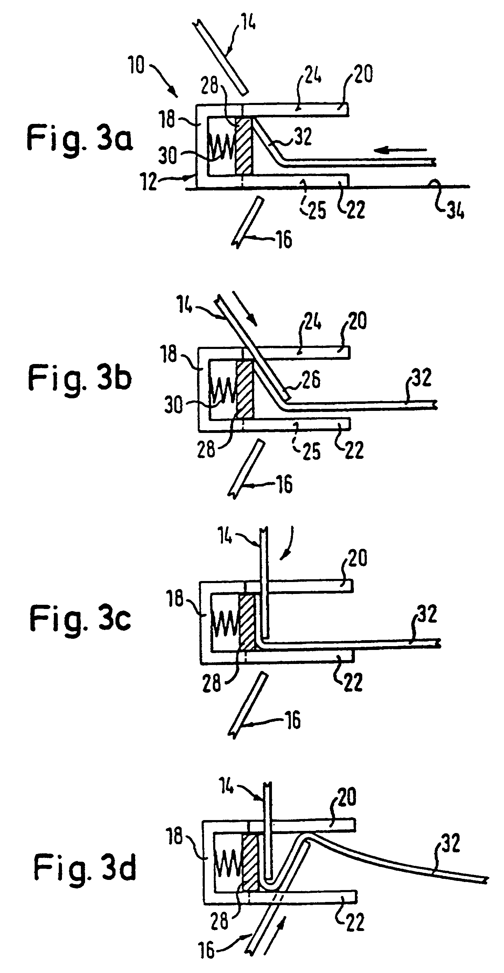

Nun wird eines der Führungslineale, in diesem Fall das erste Führungslineal 14, von oben mit seinen Zähnen 26 in die Ausnehmungen 24 des ersten Seitenteils 20 eingeführt, so daß es am Gassack 32 angreift. Das Faltlineal 14 wird vorzugsweise in schräger Richtung (siehe Pfeil in Figur 3b) eingeführt, um das Gassackmaterial nicht zu strapazieren. Das Faltlineal 14 wird heruntergedrückt, bis es das untere, zweite Seitenteil 22 berührt. Dadurch wird der Gassack 32 leicht an das untere Seitenteil 22 gedrückt.

Im nächsten Schritt wird das erste Faltlineal 14 senkrecht gestellt und parallel zu den Seitenteilen in Richtung der Rückwand 18 und des Endes 33 geführt (Figur 3c). Durch diese Bewegung wird die erste Falte des Gassacks 32 an den Anschlag 28 angepreßt. Das erste Faltlineal 14 bleibt zunächst in dieser Position.

Als nächstes tritt das zweite Faltlineal 16, in diesem Fall schräg von unten, mit seinen Zähnen 26 durch die entsprechenden Ausnehmungen 25 des zweiten Seitenteils 22 in den Führungskanals 12 ein, drückt den von den Zähnen des ersten Faltlineals 14 in der Nähe des zweiten Seitenteils 22 gehaltenen Gassack nach oben in Richtung des ersten Seitenteils 20 und legt so die nächste Falte im Gassack 32 (Figur 3d).

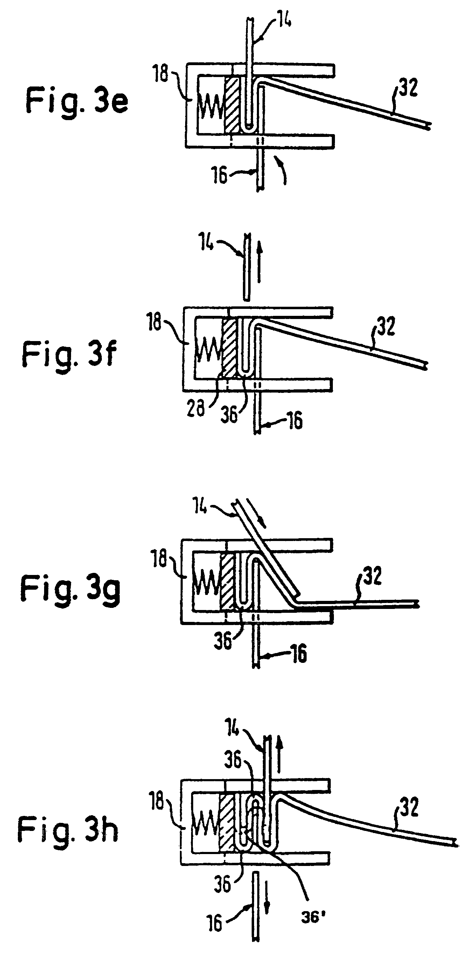

Daraufhin wird das zweite Faltlineal 16 senkrecht gestellt und in einer Richtung parallel zu den Seitenteilen 20, 22 in Richtung Rückwand 18 geführt, vorzugsweise bis es an dem vom ersten Faltlineal 14 gehaltenen Gassackabschnitt anliegt. Da auf diese Weise die bisherige Faltung fixiert ist, kann nun im nächsten Schritt (Figur 3f) das erste Faltlineal senkrecht nach oben aus dem Führungskanal 12 herausgezogen und das zweite Faltlineal 16 soweit in Richtung Rückwand 18 bewegt werden, bis die neue Falte zusammengeschoben ist. Das zweite Faltlineal 16 hält die Falten 36 gegen den Anschlag 18 gepreßt.

Der nächste Schritt, der in Figur 3g dargestellt ist, ist eine Wiederholung des Schrittes aus Figur 3b. Wieder wird das erste Faltlineal 14 schräg von oben mit seinen Zähnen 26 durch die Ausnehmungen 24 in den Führungskanal 12 eingeschoben, so daß es am Gassack 32 angreift, um die nächste Falte zu legen. Das Faltlineal 14 wird senkrecht gestellt, und die Gassackfalte wird in Richtung des zweiten Faltlineals 16 geschoben. Erst dann wird das zweite Faltlineal 16 in diesem Fall nach unten aus dem Führungskanal 12 herausgezogen, und das erste Faltlineal 14 schiebt die neugebildete Falte auf die bereits vorhandenen Falten und hält diese zusammengepreßt.

Auf diese Weise wird verfahren, bis die gesamte Länge des Gassacks 32 im Führungskanal 12 gefaltet ist. Der Gassack 32 rutscht dabei entlang der in Figur 3a gezeigten Pfeilrichtung nach oder kann nachgeführt werden.

Über die Einführlänge, die die Zähne 26 der Faltlineale 14, 16 in den Führungskanal 12 eingeschoben werden, läßt sich die Höhe der gebildeten Falte variieren. Die maximale Faltenhöhe ist durch die Höhe h der Rückwand 18 vorgegeben und wird erzielt, wenn das Faltlineal 14, 16 soweit in den Führungskanal 12 eingeschoben wird, daß es das jeweils weiter entfernte Seitenteil berührt. Wird das Faltlineal 14, 16 z.B. nur bis auf die halbe Höhe h der Rückwand 18 in den Führungskanal 12 eingeschoben, resultiert eine Falte 36' mit der halben Höhe h der Rückwand 18 (schematisch gezeigt in Figur 3 h). Auf diese Weise läßt sich die Faltungshöhe einzelner Falten während des Faltungsverfahrens beeinflussen, um z.B. die Form des gefalteten Gassackpakets an eine bestimmte Gehäuseform anpassen zu können. Die oberen und unteren Kanten der Falten können durch die Variation der Einführlänge der Faltlineale beliebig innerhalb des Führungskanals positioniert werden.

Die Vorrichtung kann, wie in den Figuren 3a bis 3h gezeigt, in waagerechter Lage verwendet werden, wobei der Gassack waagerecht nachgeführt wird, oder auch in senkrechter Lage, wobei der Gassack von oben oder von unten nachgeführt werden kann. Im zweiten Fall greifen die Faltlineale statt von oben und unten von zwei gegenüberliegenden Seiten in den Führungskanal ein.

Der Gassack kann auch inklusive einer an ihm bereits befestigten Gaslanze in den Führungskanal eingelegt werden.

Es ist auch möglich, in der Vorrichtung nacheinander mehrere Gassäcke zu falten, so daß nach Abschluß der Faltung eine Reihe von Gassackpaketen im Führungskanal angeordnet ist. Der für das Andrücken der einzelnen Falten erforderliche Gegendruck kann dabei durch die bereits gefalteten Gassackpakete aufgebracht werden.

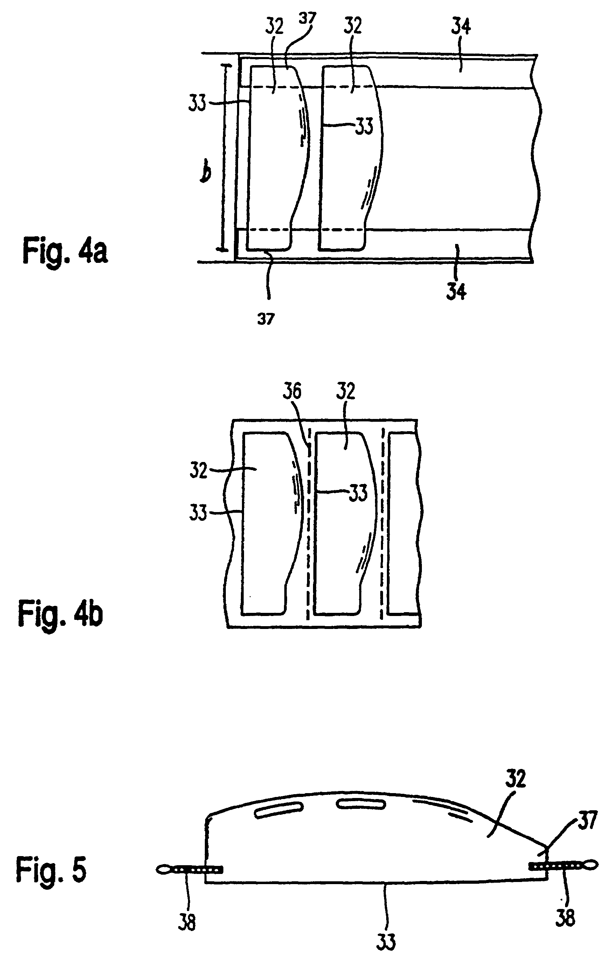

Die zu faltenden Gassäcke 32 können, wie in den Figuren 4a und 4b gezeigt ist, auch miteinander zu Bahnen verbunden sein. Dies hat den Vorteil, daß mehrere Gassäcke der Faltvorrichtung kontinuierlich in einem automatisierten Prozeß zugeführt werden können. Die einzelnen, in der Vorrichtung gefalteten Gassackpakete werden nach der Entnahme aus der Vorrichtung voneinander getrennt.

Einzelne Gassäcke 32 können z.B. nach dem Zuschnitt auf zwei möglichst weit auseinander liegende Transportstreifen 34 geklebt werden, so daß eine kontinuierliche Gassackbahn entsteht.

Auch im Webverfahren hergestellte Gassäcke, die nach der Fertigung bereits in zusammenhängenden Bahnen vorliegen (Fig. 4b), können vorteilhaft gefaltet werden. Vorzugsweise ist zwischen den einzelnen Gassäcken 32 eine Trennmarkierung 36 angebracht, die als Orientierung für die Positionierung des Gassacks 32 und besonders dessen Ende 33 für den Faltvorgang bzw. für den nachfolgend erfolgenden Trennvorgang dient. Die Trennmarkierung 36 kann eingewoben oder nachträglich aufgebracht sein. Für den Falt- bzw. Trennvorgang wird die Trennmarkierung 36 vorzugsweise optisch erfaßt.

In einer vorteilhaften Ausführungsform der Erfindung erstrecken sich die Faltlineale 14, 16 nicht über die gesamte Breite b des Gassacks 32. Unter der Breite b wird hier der Abstand von Schmalseiten 37 des Gassacks verstanden. Im mit einer solchen Vorrichtung durchgeführten Faltungsverfahren können für den Einsatz des Gassacks erforderliche, am Gassack befestigte Zusatzelemente wie z.B. an den Schmalseiten 37 des Gassacks angeordnete Spannbänder 38 bereits vor der Faltung am Gassack 32 angebracht werden. Die Spannbänder 38 kommen nämlich nicht mit den Faltlinealen 14, 16 in Berührung, so daß der Faltvorgang nicht gestört wird. Die relativ kleinen, nicht mit den Faltlinealen 14, 16 in Berührung stehenden Abschnitte des Gassacks 32 werden durch die Gewebesteifigkeit des Gassacks 32 mitgefaltet.

## Patentansprüche

1. Gassack-Faltvorrichtung (10) für einen Seitengassack für ein Fahrzeuginsassen-Rückhaltesystem,
mit einem Führungskanal (12), in dem ein zu faltender Gassack (32) angeordnet werden kann, und
einem ersten und einem zweiten Faltlineal (14, 16),
wobei die Faltlineale (14, 16) Zähne (26) aufweisen und der Führungskanal (12) ein erstes kammartiges Seitenteil (20) und ein zweites kammartiges Seitenteil (22) aufweist, in denen jeweils mehrere schlitzförmige Ausnehmungen (24, 25) vorgesehen sind, in die die Zähne (26) der Faltlineale (14, 16) eingreifen können,
wobei die Ausnehmungen (24) des ersten Seitenteils (20) und die Ausnehmungen (25) des zweiten Seitenteils (22) gegeneinander versetzt angeordnet sind.

2. Vorrichtung nach Anspruch 1, **dadurch gekennzeichnet, daß** sich das erste Seitenteil (20) parallel zum zweiten Seitenteil (22) erstreckt.

3. Vorrichtung nach einem der vorhergehenden Ansprüche, **dadurch gekennzeichnet, daß** die beiden Faltlineale (14, 16) aus entgegengesetzten Richtungen in den Führungskanal (12) eingreifen.

4. Vorrichtung nach einem der vorhergehenden Ansprüche, **dadurch gekennzeichnet, daß** im Führungskanal (12) an einem Ende ein Anschlag (28) vorgesehen ist, gegen den der in Falten (36) gelegte Gassack (32) angepreßt werden kann, um die Faltung aufrechtzuerhalten.

5. Vorrichtung nach Anspruch 4, **dadurch gekennzeichnet, daß** der Anschlag (28) durch eine Feder (30) beaufschlagt ist.

6. Vorrichtung nach einem der vorhergehenden Ansprüche, **dadurch gekennzeichnet, daß** ein Tisch (34) vorgesehen ist, auf dem der zu faltende Gassack (32) aufliegt.

7. Vorrichtung nach einem der vorhergehenden Ansprüche, **dadurch gekennzeichnet, daß** sich die Faltlineale (14, 16) nicht über die gesamte Breite (b) des Gassacks (32) erstrecken.

8. Verfahren zum Falten eines Seitengassacks für ein Fahrzeuginsassen-Rückhaltesystem unter Verwendung einer Vorrichtung nach einem der vorhergehenden Ansprüche,
wobei der Gassack (32) mit einem Ende (33) in den Führungskanal (12) eingelegt wird und
abwechselnd die Zähne (26) des ersten Faltlineals (14) in die Ausnehmungen (24) des ersten Seitenteils (20) und die Zähne (26) des zweiten Faltlineals (16) in die Ausnehmungen (25) des zweiten Seitenteils (22) eingreifen und jeweils eine Falte (36) im Gassack (32) legen,
wobei jedes der Faltlineale (14, 16) die gerade gebildete Falte (36) des Gassacks (32) in Richtung des Endes (33) des Gassacks (32) schiebt und an die vorherigen Falten (36) des Gassacks anpreßt,
wobei nach dem Anpressen das jeweilige Faltlineal (14, 16) solange im Führungskanal (12) verbleibt, um die Falten (36) des Gassacks (32) zusammenzuhalten, bis das andere Faltlineal (16, 14) die nächste Falte (36) gebildet hat.

9. Verfahren nach Anspruch 8, **dadurch gekennzeichnet, daß** dasjenige der Faltlineale (14, 16), das die letzte Falte (36) gelegt hat, nach dem Zurückziehen des anderen Faltlineals (16, 14) alle bisher gelegten Falten (36) des Gassacks (32) in Richtung des Endes (33) des Gassacks (32) zusammenschiebt und anpreßt.

10. Verfahren nach einem der Ansprüche 8 und 9, **dadurch gekennzeichnet, daß** ein Anschlag (28) im Führungskanal (12) vorgesehen ist, gegen den die erste Falte (36) angepreßt wird.

11. Verfahren nach einem der Ansprüche 8 bis 10, **dadurch gekennzeichnet, daß** durch eine Änderung der Einführlänge der Zähne (26) der Faltlineale (14, 16) in den Führungskanal (12) die Höhe der Falten (36, 36') bestimmt werden kann.

12. Verfahren nach einem der Ansprüche 8 bis 11, **dadurch gekennzeichnet, daß** in der Vorrichtung nacheinander mehrere Gassäcke (32) gefaltet werden, wobei die bereits gefalteten Gassäcke (32) während des Faltens in der Vorrichtung (10) verbleiben.

13. Verfahren nach Anspruch 12, **dadurch gekennzeichnet, daß** die zu faltenden Gassäcke (32) vor dem Falten jeweils mit wenigstens einem weiteren Gassack (32) verbunden sind.

14. Verfahren nach einem der Ansprüche 8 bis 13, **dadurch gekennzeichnet, daß** der zu faltende Gassack (32) wenigstens eine Schmalseite (37) aufweist, an der ein Spannband (38) befestigt ist, und daß das Spannband (38) während des Faltens nicht mit einem der Faltlineale (14, 16) in Kontakt kommt.

## Claims

1. A gas bag folding apparatus (10) for a side gas bag for a vehicle occupant restraint system,
comprising a guide channel (12) in which a gas bag (32) to be folded can be disposed, and
first and second folding tongues (14, 16),
the folding tongues (14, 16) having teeth (26), and the guide channel (12) having a first comb-type side part (20) and a second comb-type side part (22) in each of which several slot-shaped recesses (24, 25) are provided, into which the teeth (26) of the folding tongues (14, 16) can engage,
the recesses (24) of the first side part (20) and the recesses (25) of the second side part (22) being arranged staggered.

2. The apparatus according to claim 1, **characterized in that** the first side part (20) extends parallel to the second side part (22).

3. The apparatus according to either of the preceding claims, **characterized in that** the two folding tongues (14, 16) engage into the guide channel (12) from opposite directions.

4. The apparatus according to any of the preceding claims, **characterized in that** provided at one end in the guide channel (12) is a stop (28) against which the gas bag (32) laid in folds (36) can be pressed for maintaining the folding.

5. The apparatus according to claim 4, **characterized in that** the stop (28) is biased by a spring (30).

6. The apparatus according to any of the preceding claims, **characterized in that** a table (34) is provided on which the gas bag (32) to be folded rests.

7. The apparatus according to any of the preceding claims, **characterized in that** the folding tongues (14, 16) do not extend over the entire width (b) of the gas bag (32).

8. A method of folding a side gas bag for a vehicle occupant restraint system using an apparatus according to any of the preceding claims,
one end (33) of the gas bag (32) being inserted into the guide channel (12), and
alternately the teeth (26) of the first folding tongue (14) engaging into the recesses (24) of the first side part (20) and the teeth (26) of the second folding tongue (16) engaging into the recesses (25) of the second side part (22), laying one fold (36) in the gas bag (32) at a time,
each of the folding tongues (14, 16) pushing the just formed fold (36) of the gas bag (32) towards the end (33) of the gas bag (32) and pressing it against the preceding folds (36) of the gas bag,
after the pressing step, the respective folding tongue (14, 16) remaining in the guide channel (12) to hold the folds (36) of the gas bag (32) together until the other folding tongue (16, 14) has formed the next fold (36).

9. The method according to claim 8, **characterized in that** that one of the folding tongues (14, 16) which has laid the last fold (36) pushes, when the other folding tongue (16, 14) has been withdrawn, all the previously laid folds (36) of the gas bag (32) together and towards the end (33) of the gas bag (32) and presses them against it.

10. The method according to either of claims 8 and 9, **characterized in that** a stop (28) is provided in the guide channel (12) against which the first fold (36) is pressed.

11. The method according to any of claims 8 to 10, **characterized in that** the height of the folds (36, 36') can be determined by changing the insertion length of the teeth (26) of the folding tongues (14, 16) in the guide channel (12).

12. The method according to any of claims 8 to 11, **characterized in that** several gas bags (32) are folded in the apparatus one after the other, the gas bags (32) already folded remaining in the apparatus (10) during the folding process.

13. The method according to claim 12, **characterized in that** the gas bags (32) to be folded are each connected to at least one further gas bag (32) before being folded.

14. The method according to any of claims 8 to 13, **characterized in that** the gas bag (32) to be folded has at least one narrow side (37) to which a tensioning strap (38) is attached, and that the tensioning strap (38) does not come into contact with either of the folding tongues (14, 16) during the folding process.

## Revendications

1. Dispositif de pliage de coussin à gaz (10) pour un coussin à gaz latéral pour un système de retenue de passager de véhicule, comprenant
un canal de guidage (12) dans lequel peut être agencé un coussin à gaz (32) à plier, et
un premier et un deuxième guide de pliage (14, 16),
les guides de pliage (14, 16) présentant des dents (26), et le canal de guidage (12) présentant une première partie latérale (20) en forme de peigne (20) et une deuxième partie latérale (22) en forme de peigne, parties latérales dans lesquelles sont prévus plusieurs évidements (24, 25) en forme de fentes dans lesquels peuvent s'engager les dents (26) des guides de pliage (14, 16),
les évidements (24) de la première partie latérale (20) et les évidements (25) de la deuxième partie latérale (22) étant agencés en décalage les uns par rapport aux autres.

2. Dispositif selon la revendication 1, **caractérisée en ce que** la première partie latérale (20) s'étend parallèlement à la deuxième partie latérale (22).

3. Dispositif selon l'une des revendications précédentes, **caractérisé en ce que** les deux guides de pliage (14, 16) s'engagent dans le canal de guidage depuis des directions opposées.

4. Dispositif selon l'une des revendications précédentes, **caractérisé en ce que** dans le canal de guidage (12), il est prévu à une extrémité une butée (28) contre laquelle le coussin à gaz (32) mis en plis (36) peut être pressé pour maintenir le pliage.

5. Dispositif selon la revendication 4, **caractérisé en ce que** la butée (28) est sollicitée par un ressort (30).

6. Dispositif selon l'une des revendications précédentes, **caractérisé en ce qu'**il est prévu une table (34) sur laquelle repose le coussin à gaz (32) à plier.

7. Dispositif selon l'une des revendications précédentes, **caractérisé en ce que** les guides de pliage (14, 16) ne s'étendent pas sur toute la largeur (b) du coussin à gaz (32).

8. Procédé de pliage d'un coussin à gaz latéral pour un système de retenue de passager de véhicule en utilisant un dispositif selon l'une des revendications précédentes,
dans lequel le coussin à gaz (32) est inséré par une extrémité (33) dans le canal de guidage (12), et
alternativement, les dents (26) du premier guide de pliage (14) s'engagent dans les évidements (24) de la première partie latérale (20), et les dents (26) du deuxième guide de pliage (16) s'engagent dans les évidements (25) de la deuxième partie latérale (22) et forment un pli (36) respectif dans le coussin à gaz (32),
dans lequel chacun des guides de pliage (14, 16) pousse le pli (36) du coussin à gaz (32), qui vient juste d'être formé, en direction de l'extrémité (33) du coussin à gaz (32) et le presse sur les plis précédents (36) du coussin à gaz,
dans lequel après l'étape de pressage, le guide de pliage (14, 16) respectif reste dans le canal de guidage (12) pour maintenir les plis (36) du coussin à gaz (32) jusqu'à ce que l'autre guide de pliage (16, 14) ait formé le pli suivant (36).

9. Procédé selon la revendication 8, **caractérisé en ce que** celui des guides de pliage (14, 16) qui a formé le dernier pli (36), pousse et presse les uns contre les autres tous les plis (26) précédemment formés du coussin à gaz (32) en direction de l'extrémité (33) du coussin à gaz (32), après que l'autre guide de pliage (16, 14) ait été retiré.

10. Procédé selon l'une ou l'autre des revendications 8 et 9, **caractérisé en ce qu'**il est prévu dans le canal de guidage (12) une butée (28) contre laquelle est pressé le premier pli (36).

11. Procédé selon l'une des revendications 8 à 10, **caractérisé en ce qu'**on peut déterminer la hauteur des plis (36, 36') par une modification de la longueur d'introduction des dents (26) des guides de pliage (14, 16) dans le canal de guidage (12).

12. Procédé selon l'une des revendications 8 à 11, **caractérisé en ce que** dans le dispositif, plusieurs coussins à gaz (32) sont pliés les uns après les autres, les coussins à gaz (32) déjà pliés restant dans le dispositif (10) pendant le pliage.

13. Procédé selon la revendication 12, **caractérisé en ce qu'**avant le pliage, les coussins à gaz (32) à plier sont chacun reliés à un autre coussin à gaz (32).

14. Procédé selon l'une des revendications 8 à 13, **caractérisé en ce que** le coussin à gaz (32) à plier présente au moins un petit côté (37) sur lequel est fixé un ruban de serrage (38), et **en ce que** pendant le pliage, le ruban de serrage (38) ne vient pas en contact avec un des guides de pliage (14, 16).
